# EUROPEAN PATENT SPECIFICATION

(11) **EP 1 224 371 B1**
(45) Date of publication and mention of the grant of the patent: **29.09.2004**
(21) Application number: 00971590.5
(22) Date of filing: 26.10.2000
(51) Int. Cl.: E05B 65/06

(54) **TWO-WAY GATE CATCH**
ZWEIWEG TORSCHNÄPPER
LOQUET DE PORTE VA-ET-VIENT

(30) Priority: 26.10.1999 GB 9925191
(43) Date of publication of application: 24.07.2002
(73) Proprietor: Evans, Caroline Lilian, Faringdon, Oxon SN7 7QL (GB); Evans, Philip, Faringdon, Oxon SN7 7QL (GB)
(72) Inventor: Evans, Caroline Lilian, Faringdon, Oxon SN7 7QL (GB); Evans, Philip, Faringdon, Oxon SN7 7QL (GB)
(74) Representative: Clayton-Hathway, Anthony
(86) International application number: PCT/GB2000/004134
(87) International publication number: WO 2001/031151

(56) References cited:
- US-A- 1 347 991
- US-A- 2 758 863
- US-A- 3 148 904
- US-A- 4 083 591
- US-A- 4 111 475
- US-A- 5 103 658

## Description

### FIELD OF INVENTION

The present invention relates to a catch for a two-way gate that is hinged to allow opening into or out of an enclosure.

### PRIOR ART

French Patent No 2756321 (Plissonneau) describes a gate (2) hinged to a post (4) anchored in the ground and having a lock with a bolt-like latch (16) with a handle (24) which is pulled back to release the latch from a housing (20) in a strike plate (22) mounted on a second gate post. A spring (18) on the gate (2) returns the latch to its closed position. The strike plate has two sloped sections (26,28) on either side of the housing (20) to guide the latch into the housing from either side. The housing has a central bar (30) with a rubber coating which forms a stop for the latch. The rubber-coated central bar is expected to absorb the inertia force arising when a gate is slammed so that the latch does not climb a first slope, ride over the housing and pass to the second slope leaving the gate loose. Disadvantageously, problems may arise when the rubber perishes or falls off, or the gate sags so holding the latch below the striker plate.

Further, United States Patent 1280653 (Brady) describes another form of two-way latch comprising a base plate having a pair of flanges projecting from the base plate, a generally "U"-shaped gate-latching member supported to pivot in the flanges to hold or release the free edge of a hinged gate, and a locking member having legs to extend between the "U"-shaped member and base plate to hold the latching member in a first or " gate-closed" position. When the legs of the locking member are raised, the latching member is freed to pivot so the gate is able to open in whatever direction it is pushed. This two-way latch was designed for use in stock yards and includes several robust forgings to survive the crushing force on the legs arising when a gate is stemmed. A disadvantage with this arrangement is that an animal leaning on the locked gate will impose a thrust outwards on the gate posts which, with sufficient effort, may push the posts apart and even allow the gate to open.

Other catches for two-way gates are described for example in US-A-1 347 991, US-A-5 103 658 or US-A-4 083 591.

Growing interest in the improvement of access to public footpaths and bridle-ways has identified a need for a two-way gate latch that can be easily used by people in wheel chairs, people pulling two-wheeled carts such as anglers or golfers, and people on horseback, which can allow the overall gate structure to be maintained despite animals exerting force on the gate itself.

### SUMMARY OF INVENTION

The present invention provides a gate latch according to claim 1.

In a first aspect, the present invention provides a gate catch for allowing gate to be moved in a two way direction between open and shut positions comprising a mounting plate for fixing the catch to a gate post, a gate receiving member pivotally supported on the mounting plate about a pivoting means, an engaging member resiliently biased towards a position whereby pivotal movement of. the gate receiving member is prevented, wherein the gate receiving member comprises a pair of side plates each having a first surface diverging away from the pivoting means into a second surface for engaging the gate, said second surface being at an angle (B) to said first surface.

One advantage that the catch of the present invention has over the prior art is that the side plates have substantial surface area for engaging the gate, whilst the engaging means acts on a larger area of the exterior surface of the gate receiving member with enhanced restraining leverage.

The included angle α° between the first surfaces is preferably between 60° and 145°, more preferably between 80° and 100°. The second surfaces are typically inclined towards each other at an angle β° less than 15 °

Preferably, the engaging means has a pair of lateral portions each of which has a profiled surface substantially parallel to the pivotal axis of the gate receiving member to prevent pivoting when the gate is in a shut position and a support surface extending in a plane substantial perpendicular to the axis of pivoting and against which the gate receiving member when returning from an open position (in which the gate may be opened) to the shut position.

In preferred embodiments, the profiled surface of the engaging member generally conforms to the exterior of the first surfaces with a clearance to permit sliding between them. Return from the open position to the shut position may be assisted by a spring, which urges at least one of the lateral portions to maintain sliding contact with a free edge of a side plate until the first position is re-established

In one embodiment, the engaging member has an elongate back-plate held in sliding contact with the mount plate by a bolt or the like, and a pair of substantially triangular lateral portions extending from the lower end of the back-plate, each of said lateral portions having a profiled surface to generally conform with the exterior surface of a respective side plate of the gate receiving member. In this embodiment, a cover may be provided to cover at least some of the sliding back-plate and any return spring fitted.

In another embodiment, the engaging member is in the form of a pair of wedge portions integral with the mounting plate and extending, one to each side of the gate receiving member in the shut position, to prevent pivoting of the gate receiving; member the gate receiving member being movable along its pivot axis to move clear of the wedge portions, so as to be free to pivot across an end face of one of the wedge portions to an open position.

In this second embodiment, the pair of wedge portions may have opposed divergent surfaces to assist catching of the gate receiving member when the gate slams shut from said open to said shut position.

The mounting plate may be made rectangular to provide room at the corners for fixings to a post and a gate receiving member having side plates taller than they are wide so that catching loads are spread on the edge of the gate as the engaging member.

If desired, the two-way catches of the present invention may be provided with means to prevent relative motion between the engaging member and the gate receiving member to allow the gate to be locked.

The first embodiment may be made using components stamped from sheet metal: the second embodiment may use a mounting plate drawn from sheet metal or cast in metal such as a spheroidal graphite cast iron so that the catches may be mass-produced.

The present invention will now be described in further detail by way of the following, non-limiting examples with reference to the accompanying drawings, in which:-

### BRIEF DESCRIPTION OF THE DRAWINGS

Fig 1 is a perspective view of a two-way gate hinged to one post and catchable at another post having a two-way catch according to the present invention;
Fig 2 is a perspective view of a first embodiment of the catch of the present invention in a first or open position with the cover removed;
Fig 3 is a perspective view of the catch shown in Fig 2 but in a closed position;
Fig 4 is a perspective view of the catch shown in Figs 2 and 3 modified to include means to apply a padlock to the catch;
Fig 5 is an under-plan view of an edge rail of a gate, gate receiving member and engaging member according to the present invention;
Fig 6 is a plan view of a blank as stamped from sheet metal for forming an engaging member for use in a catch according to the present invention;
Fig 7 is a longitudinally sectioned side view of an engaging member formed from the blank shown in Fig 6;
Fig 8 is a front elevation of a gate hinged to swing between two posts and having an extension handle to facilitate equestrian use of the catch of the present invention;
Fig 9 is an enlarged view of the extension handle shown in Fig 8;
Fig 10 is a plan view of a fixing bracket for use in a catch according to the present invention.
Fig 11 is a side view of the bracket shown in Fig 10;
Fig 12 is a fragment of the bar from which the extension bar shown in Figure 9 is formed;
Fig 13 is a front view of a rubber buffer;
Fig 14 is a perspective view of a second embodiment of the catch of the present invention shown in a closed position;
Fig 15 is a rear elevation of the catch shown in Fig 14; and
Fig 16 is a perspective view of the catch shown in Figs 14 and 15 in an open position.

### BEST MODE OF INVENTION

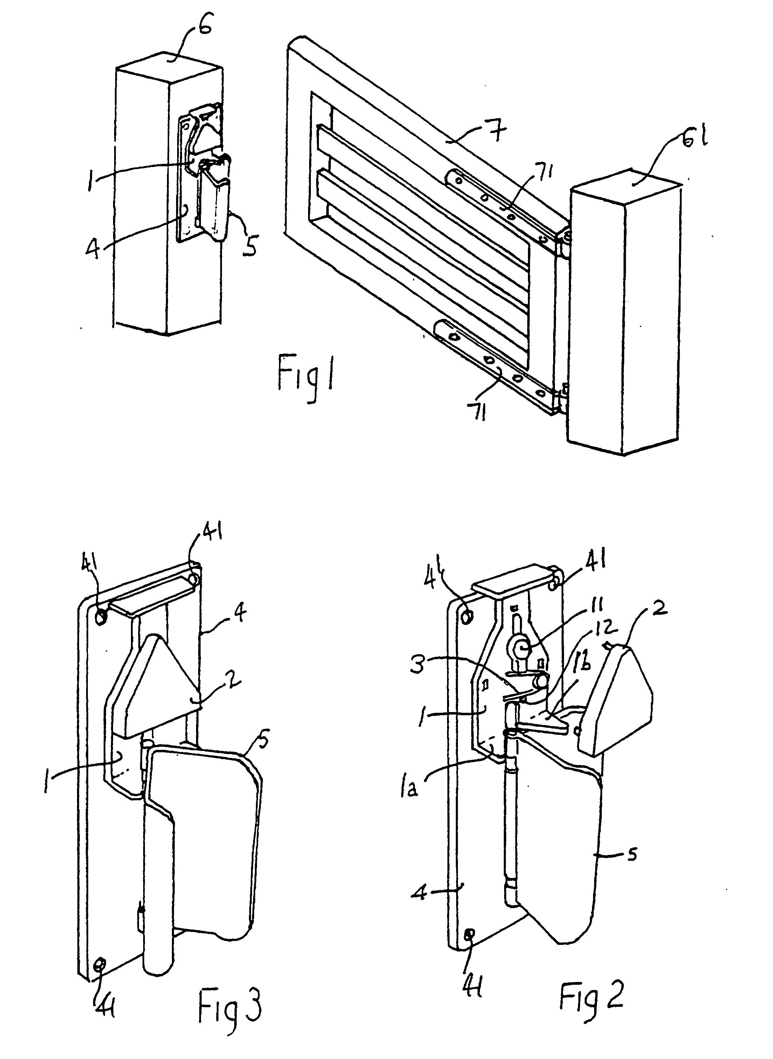

Fig 1 shows a gate 7 connected by hinges 71 to a post 61 so that the gate is able to swing between the post 61 and another post 6 either into or out of a field or yard in the manner of a two-way gate. The post 6 has a two-way catch fixed to its surface nearest the free edge of the gate so the gate may be caught in the closed position. In Fig1 the gate and catch are shown in an open position.

Figs 2 and, 3 show the first embodiment of this two-way catch on an larger scale. The catch comprises a mounting plate 4 having a hole 41 at each corner for fixing to a post, a generally "U"-shaped gate receiving member 5 pivotally mounted on the mounting plate 4, and an engaging member 1 slidably mounted on the mounting plate 4 so that gravitational force urges the engaging member 1 to a first position in which side prongs 1a,1b to each side of the gate receiving member prevent pivoting of the gate receiving member as shown in Fig 3.

A spring 3 acts between an engaging member retainer 11 and a protrusion 12 on the engaging member 1 to assist gravitational force to achieve prompt sliding to the first or locked position as the gate receiver pivots to its first or central position to enclose the edge of the gate 7, as best seen in Fig 3.

A lock cover 2, shown removed in Fig 2 for clarity, is push-fitted to the engaging member 1 to prevent excessive weathering of the return-spring 3 and cover any parts lubricated with grease.

In order to unlock the gate, the engaging member 1 is lifted against the return spring 3 and the gate is pushed open; this moves the gate receiving member to one side as shown in Figures 1 and 2, to a position at which the top edge of the gate receiving member supports the engaging member 1, as best seen in Fig 2.

In order to lock the gate, the gate 7 is pushed into the first or closed position causing the gate receiving member 5 to move back to the centre position where the engaging means 1 is able to fall down to embrace an exterior surface portion of the gate receiving member 5 so preventing further movement of the receiver and hold the edge of the gate 7

It will be noticed that the gate 7 has no catch or protrusion to snag on clothes, horses or harnesses, the active catch being fixed to the gate post 6 by means of mounting plate 4. The extension handle, described below, is made so as to be visible and is fixed high up to so as to be out of harm's way.

As the catch is symmetrical, it works in the same way in both directions, therefore the gate may be opened and closed in the same manner from either side.

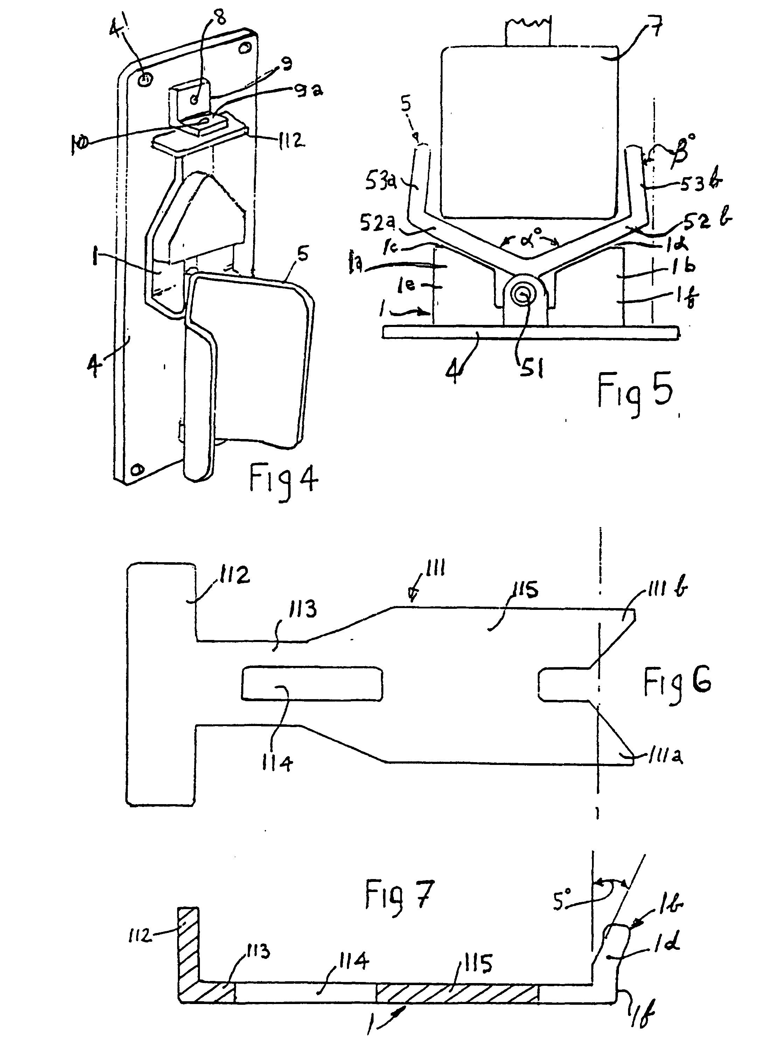

Fig 4 shows a modification in which a two-way catch has a safety catch 9 fitted by means of a pivot 8 to the mounting plate 4 adjacent the flat handle 112 of the engaging means to prevent lifting of the engaging means to free the gate receiving and gate. This safety catch thereby preventing the gate being opened accidentally by an animal.

As shown in Fig 4, a flange of the safety catch 9 is pivoted about a pivot 8 to align a hole 10 in the flange 9a with a hole (not visible in Fig 4) in the top handle of the engaging means to permit locking by a padlock (not shown). In other respects the catch shown in Fig 4 works in like manner to that described with reference to Figs 1 to 3.

These two-way catches may be assembled from cast components or components stamped or formed from sheet metal or rod. Treatment, such as galvanising, is desirable to prevent corrosion. However, most preferably, stainless steel. is used as the material for assembly.

The embodiment shown in Figs 1 to 4 uses an engaging means retainer 11 to hold the engaging means 1 on the mounting plate 4 in such a way that the engaging means 1 can be lifted from the first position to slide to the second position, so as to free the gate receiving 5. The retainer 11 also permits the engaging means to pivot about the retainer so that, as a lateral portion, such as 1b, is supported on the open side 53b of the gate receiver 5, the engaging means pivots slightly thus allowing the other lateral portion 1 to tilt downwards slightly in readiness to catch the gate receiving member 5 as it returns to the closed position.

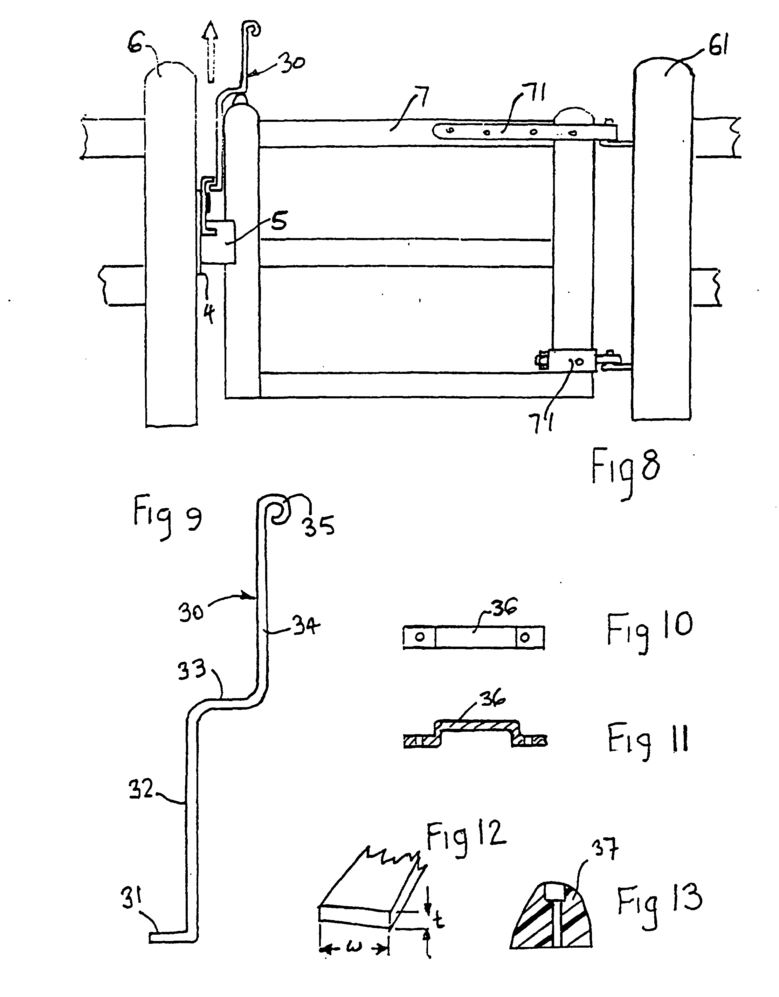

Figs 5, 6 and 7 are shown on an enlarged scale for clarity. Fig 5 shows an edge portion of a gate 7 in a gate receiving member 5 which is held in the first position by lateral portions 1a, 1b of a engaging means 1. In this first or closed position, vertical surfaces of each lateral portion 1 a, 1 b embrace the exterior surface of the gate receiving member 5 to prevent pivoting about pivot pin 51 in bearings on the mounting plate 4.

The gate receiving member 5 comprises a pivot pin 51, from which two pivot margins 52a, 52b diverge to join side portion 53a,53b which embrace the edge of the gate 7. The included angle α° between the pivot margins 52a, 52b may be in the range of 60 to 145, for example in the range of 80° to 140°, and, as shown in the embodiment illustrated by Fig 5, can be 135°.

When the engaging means 1 is lifted clear of the gate receiving member 5 opening of the gate7 urges a side portion 53a or 53b to move out of its way. It will be noticed that the side portions 53a, 53b are turned inwards through a small angle β° in the range 5° to 20°, the angle β° shown in Fig 5 being 15°. The receiver has its side plate portions angled towards each other by between 5° so that, when "play" in the mechanism is taken up, the plate portions are parallel to the gate and at 90° to the mounting plate 4. This reduces the risk that pressure on the gate will exert an end force to push the gate posts apart.

Fig 6 shows a flat blank 111 cut out of a sheet metal such as stainless steel to make the engaging means 1. Portions of the engaging means can be recognized in the blank 11 such as a handle portion 112, a shank portion 113 defining a rectangular slot 114 which permits the engaging means to slide on the mounting plate 4 when assembled, a broader portion 115 leading to a forked end defining portions 111 a and 111b which are later formed-up to make lateral portions 1a, 1b.

Fig 7 shows an engaging means formed-up from the blank 111 to comprise an operating handle 112 upstanding from the shank 113 defining the slot 114, the broader portion 115 and a pair of lateral portions 1a, 1b upstanding from the broader portion in a direction substantially perpendicular it. The ends of the lateral portions 1a, 1b are bent away from the perpendicular ( as shown in Fig 7) by approximately 5° to enhance the positive locking feature by presenting a support surface 1e, 1f to the upper edge of the receiver and hold the receiver more positively in the open position to resist it being moved by adverse weather conditions. Each lateral portion 1 a, 1 b has a profiled surface 1 c and 1d which, when assembled as shown in Fig 5, are substantially parallel to the pivot axis of the gate receiver 5. In Fig 7 the visible profiled surface of a lateral portion is denoted 1 d.

If not made from materials resistant to corrosion (such as stainless steel), the engaging means may protected by galvanising or electro-plating to resist corrosion and wear.

Fig 8 shows a gate 7 hinged to swing between two posts 6,61 as already described with reference to Fig 1 so the same integer numbers are used for like parts in both Figs. In order to enable people on horses to operate the two-way catch, the gate 7 is fitted with an extension handle 30 reaching a convenient height above the gate 7. The extension handle 30 is quite tall to reduce the risk of animals colliding with it.

As best seen in Fig 9, the extension handle comprises a lifter portion 31 to engage with the underside of the engaging means handle 112, a first portion 32 extending up the edge of the gate 7, a cranked portion 33 to extend over the end of the gate 7, a second portion 34 extending above the gate 7 to terminate in a curl 35 provided for comfortable grip. The first portion 32 is held on the free edge of the gate 7 by two brackets 36 best seen in Figs 10 and 11.Each bracket 36 has holes for fixing at each end and an offset portion in between to confine the first portion 32 against the post. When fitted on the gate 7, the cranked portion 33 is supported by an optional rubber buffer 37 shown in cross-section in Fig 13.

Fig 12 shows a fragment of the metal used for the extension handle 30 and fixing brackets 36: typically a stainless steel 5mm thick by 30mm wide, optionally 6mm thick by 25mm wide, is used and this can be profiled to achieve longitudinal rigidity, if needed.

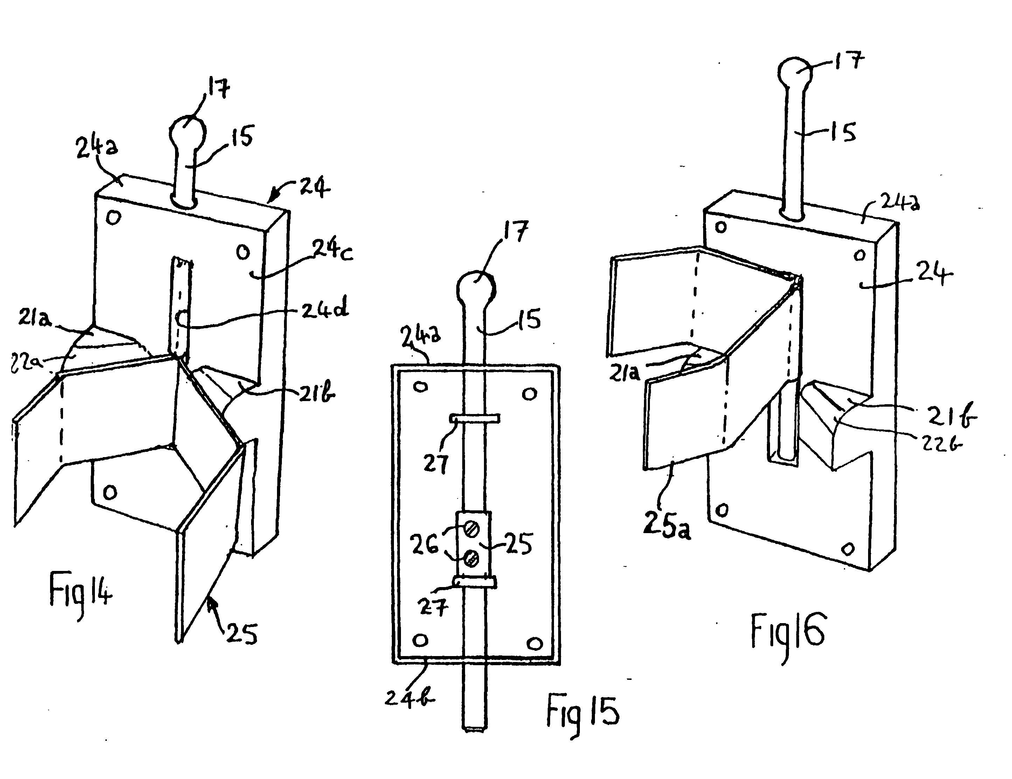

Fig 14,15 and 16 show a second embodiment of the two-way catch in which relative motion as between a gate receiver and lateral portions 21 a, 21 b of a engaging means from a first position in which the receiver is locked against the lateral portions, to a second position at which the gate receiver is free to pivot on a mounting plate permits release of a gate.

Referring to Figs 14, 15 and 16 it will be seen that this second embodiment comprises a mounting plate 24, engaging means 21 a, 21 b on a front face 24c of the mounting plate, an operating rod 15 slidably mounted in the mounting plate 24, and a gate receiver 25 wrapped around and fixed to the operating rod.

The mounting plate has an upper end wall 24a, a lower end wall 24b, a front wall 24c defining an elongate slot 24d and side walls 24e, 24f. engaging means 21 a, 21b, each side of the slot 24d protrude from front wall 24c. If the mounting plate 24 is stamped from sheet metal it is possible, when cutting along the centre line of slot 24d, to form the ends of the slot material into limit stops 27 (see Fig 15) to limit travel of the rod 15 and to bend aside material to make side guides for the gate receiver 25. Alternatively, the mounting plate may be die-cast or sand cast in a corrosion-resistant metal.

The operating rod 15 passes from a knob 17, through the top wall 24a to extend parallel to slot 24d to pass through the wrap-around portion of the gate receiver 25 (best seen in Fig 6) and extend beyond to pass through the lower end wall 24b.

Fig 14 shows the gate receiver 25 in the first position where it is between the engaging means wedges 21 a, 21 b and so unable to rotate with rod 15 to which it is fixed. The gate receiver is fixed at its wrap-around portion to the rod 15 by screws 26 best seen in Fig 15.

Fig 16 shows the rod 15 lifted to the second position at which the gate receiver 25 is above the engaging means 21 a, 21 b so that the gate receiver has been able to pivot with operating rod 15 to pass over the top side or support surface of the lateral portion 21 a so allowing a gate (not shown) to be pushed open.

When the gate is closed, it strikes side portion 25a causing the gate receiver to rotate with rod 15 until the receiver is nearly aligned with the gap between the lateral wedge portions 21a, 21b whereupon the combined weight of rod 15 and receiver 25 causes the receiver to drop down the sloping shoulder 22a of lateral wedge 21 a to achieve progressive alignment of gripper means 21a, 21b and receiver 25 for final locking in the first position.

Thus, the present invention provides a simple, yet effective, two-way gate catch that is easy to use, but is designed such that the overall structure of the gate is maintained even if substantial force, for example exerted by animals, is directed upon the gate itself.

## Claims

1. A gate catch for allowing a gate (7) to be moved in a two way direction between open and shut positions comprising a mounting plate (4, 24) for fixing the catch to a gate post (6), a gate receiving member (5.25) pivotally supported on the mounting plate (4.24) about a pivoting means (51), an engaging member (1) resiliently biased towards a position whereby pivotal movement of the gate (7) receiving member (5.25) is prevented, **characterised in that** the gate receiving member (5.25) comprises a pair of side plates each having a first surface (52a, 52b) diverging away from the pivoting means (51) into a second surface (52a, 53b) for engaging the gate (7), said second surfaces (53a, 53b) being angled inwards towards each other.

2. A catch as claimed in claim 1, wherein the angle (α) of divergence of the first surfaces (52a, 52b) about the pivoting means (51) is between 60 and 145 degrees.

3. A catch as claimed in either of claims 1 or 2, wherein the angle (β) between the first (52a, 52b) and second (53a, 53b) surfaces is less than 15 degrees.

4. A catch according to any preceding claim, wherein the engaging member (1) has a pair of lateral portions (1a,1b:21a,21b) each of which extends away from the mounting plate (4,24) to restrain an exterior surface of a respective first surface to hold the gate receiving member (5,25) in a first position whereby the gate is held shut.

5. A catch according to any preceding claim, wherein each lateral portion (1a,1b) has a profiled surface (1c,1d) substantially parallel to the pivotal axis of the gate receiving (5,25) to prevent pivoting when the gate is held shut, and a support surface (1e,1f) extending in a plane substantially perpendicular to the pivotal axis, and against which the gate receiving member engages when returning to a position in which the gate is held shut.

6. A catch according to claim 5, wherein the lateral portions (1a,1b) of the engaging member (1,21a,21b) are profiled to make sliding engagment with the exterior of the first surfaces (52a,52b).

7. A catch according to any preceding claim, wherein when the catch is in position in which the gate can be opened a spring (3) urges at least one of the first surfaces (1a,1b) to remain in sliding contact with an edge of the gate receiving member until the shut position is re-established.

8. A catch according to any preceding claim, ,wherein the engaging member grip (1,21) has an elongate back plate (113,115) held in sliding contact with the mounting plate (4), by a bolt (11), and a pair of substantially triangular lateral portions (1a,1b) extending from a lower end of the back-plate, each of said lateral portions having a profiled surface (1c,1d) conforming with the exterior of the first surfaces (52a,52b) of a respective side plate.

9. A catch according to claim 8 wherein a cover (2) covers at least some of the sliding back-plate and any return spring (3) fitted.

10. A catch according to any of claims 1 to 3, wherein the engaging member is in the form of a pair of wedge portions (1a,21b)integral with the mount plate (24) and extending, one to each side of the gate receiving member (25) in the shut position, to prevent pivoting of the gate receiving member ; the gate receiver being movable along its pivotal axis to move clear of the wedge portions to be free to pivot across an end face of one of the wedge portions to an open position.

11. A catch according to claim 10, wherein the pair of wedge portions (21a,21b) have divergent surface portions (22a,22b) extending between profiled surfaces that hold the gate receiving (24) in the first position, and support surfaces (21 e,21 f) that support the receiver in the open position.

12. A catch according to any preceding claim, wherein the mount plate (4) is rectangular, having holes (41) for fixings at each corner, and the gate receiving member (5,25) has side plates which are taller than they are wide.

13. A catch according to any preceding claim, wherein a lock means 9 is provided for preventing relative motion between the gate receiving member (5) and the engaging member (1) so as to lock the gate.

## Patentansprüche

1. Torverschluss zum Zulassen der Bewegung eines Tores (7) in zweiwegiger Richtung zwischen offenen und einer geschlossenen Stellung(en), umfassend eine Befestigungsplatte (4, 24) zum Befestigen des Verschlusses an einem Torpfosten (6), ein Toraufnahmeelement (5, 25), das auf der Befestigungsplatte (4, 24) um ein Drehmittel (51) schwenkbar gelagert ist, ein Eingriffselement (1), das federnd in Richtung auf eine Position vorgespannt ist, wodurch eine Schwenkbewegung des Aufnahmeelements (5, 25) des Tores (7) verhindert wird, **dadurch gekennzeichnet, dass** das Toraufnahmeelement (5, 25) ein Paar Seitenplatten, die jeweils eine erste Fläche (52a, 52b) haben, die vom Drehmittel (51) weg in eine zweite Fläche (52a, 53b) abweicht, zum Ineingriffnehmen des Tores (7) umfasst, wobei die genannten zweiten Flächen (53a, 53b) nach innen aufeinander zu angewinkelt sind.

2. Verschluss nach Anspruch 1, bei dem der Winkel (α) der Ablenkung der ersten Flächen (52a, 52b) um das Drehmittel (51) zwischen 60 und 145 Grad beträgt.

3. Verschluss nach einem der Ansprüche 1 oder 2, bei dem der Winkel (β) zwischen den ersten (52a, 52b) und zweiten (53a, 53b) Flächen kleiner als 15 Grad ist.

4. Verschluss nach einem der vorhergehenden Ansprüche, bei dem das Eingriffselement (1) ein Paar seitlicher Teile (1a, 1b; 21a, 21b) hat, die sich jeweils von der Befestigungsplatte (4, 24) weg erstrecken, um eine Außenfläche einer jeweiligen ersten Fläche zu hemmen, um das Toraufnahmeelement (5, 25) in einer ersten Position zu halten, wodurch das Tor geschlossen gehalten wird.

5. Verschluss nach einem der vorhergehenden Ansprüche, bei dem jeder seitliche Teil (1a, 1b) eine profilierte Fläche (1c, 1d), die im Wesentlichen parallel zur Drehachse der Toraufnahme (5, 25) ist, um Schwenken zu verhindern, wenn das Tor geschlossen gehalten wird, und eine Stützfläche (1e, 1f) hat, die sich in einer zur Drehachse im Wesentlichen lotrechten Ebene erstreckt, und an dem das Toraufnahmeelement in Anlage kommt, wenn es in eine Position zurückkehrt, in der das Tor geschlossen gehalten wird.

6. Verschluss nach Anspruch 5, bei dem die seitlichen Teile (1a, 1b) des Eingriffselements (1, 21a, 21b) profiliert sind, um mit dem Äußeren der ersten Flächen (52a, 52b) in Gleiteingriff zu kommen.

7. Verschluss nach einem der vorhergehenden Ansprüche, bei dem, wenn der Verschluss in der Position ist, in der das Tor geöffnet werden kann, eine Feder (3) wenigstens eine der ersten Flächen (1a, 1b) drängt, in Gleitkontakt mit einem Rand des Toraufnahmeelements zu bleiben, bis die geschlossene Position wieder hergestellt wird.

8. Verschluss nach einem der vorhergehenden Ansprüche, bei dem der Eingriffselementgriff (1, 21) eine längliche Grundplatte (113, 115), die von einem Bolzen (11) in Gleitkontakt mit der Befestigungsplatte (4) gehalten wird, und ein Paar von im Wesentlichen dreieckigen seitlichen Teilen (1a, 1b) hat, die sich von einem unteren Ende der Grundplatte erstrecken, wobei jeder der genannten seitlichen Teile eine profilierte Fläche (1c, 1d) hat, die dem Äußeren der ersten Flächen (52a, 52b) einer jeweiligen Seitenplatte entspricht.

9. Verschluss nach Anspruch 8, bei dem eine Abdeckung (2) wenigstens einen Teil der gleitfähigen Grundplatte und jeder angebrachten Rückzugfeder (3) abdeckt.

10. Verschluss nach einem der Ansprüche 1 bis 3, bei dem das Eingriffselement die Form eines Paares von Keilteilen (21a, 21b) hat, die mit der Befestigungsplatte (24) integral sind und sich jeweils nach einer Seite des Toraufnahmeelements (25) in der geschlossenen Position hin erstrecken, um das Schwenken des Toraufnahmeelements zu vermeiden; wobei der Toraufnehmer entlang seiner Drehachse bewegt werden kann, um sich von den Keilteilen weg zu bewegen, um zum Schwenken über eine Endfläche von einem der Keilteile auf eine offene Position frei zu sein.

11. Verschluss nach Anspruch 10, bei dem das Paar von Keilteilen (21a, 21b) sich zwischen profilierten Flächen erstreckende abgelenkte Oberflächenteile (22a, 22b), die die Toraufnahmeelement (25) in der ersten Position halten, und Stützflächen (21e, 21f) hat, die den Aufnehmer in der offenen Position stützen.

12. Verschluss nach einem der vorhergehenden Ansprüche, bei dem die Befestigungsplatte (4) rechteckig ist mit Löchern (41) für Befestigungselemente an jeder Ecke und das Toraufnahmeelement (5, 25) Seitenplatten hat, die höher sind als breit.

13. Verschluss nach einem der vorhergehenden Ansprüche, bei dem eine Arretiervorrichtung (9) zum Verhindern relativer Bewegung zwischen dem Toraufnahmeelement (5) und dem Eingriffselement (1) bereitgestellt ist, um das Tor zu arretieren.

## Revendications

1. Un loquet de barrière pour permettre de déplacer une barrière (7) dans deux directions entre une position ouverte et une position fermée, comprenant une plaque de montage (4, 24) pour fixer le loquet sur un pieu (6), un élément récepteur (5, 25) de barrière supporté de façon pivotante sur la plaque de montage (4, 24) autour d'un moyen formant pivot (51), un élément d'engagement (1) rappelé élastiquement vers une position à laquelle le mouvement de pivot de l'élément récepteur (5, 25) de barrière (7) est empêché, **caractérisé en ce que** l'élément récepteur (5, 25) de barrière comprend une paire de plaques latérales dont chacune présente une première surface (52a, 52b) qui divergent relativement au moyen formant pivot (51) dans une deuxième surface (53a, 53b) pour engager la barrière (7), lesdites deuxièmes surfaces (53a, 53b) étant inclinées vers l'intérieur et l'une vers l'autre.

2. Un loquet selon la revendication 1, dans lequel l'angle (α) de divergence des premières surfaces (52a, 52b) autour du moyen formant pivot (51) est compris entre 60 et 145 degrés.

3. Un loquet selon la revendication 1 ou 2, dans lequel l'angle (β) compris entre les premières (52a, 52b) et deuxièmes (53a 53b) surfaces est inférieur à 15 degrés.

4. Un loquet selon l'une quelconque des revendications précédentes dans lequel l'élément d'engagement (1) est pourvu d'une paire de parties latérales (1a, 1b ; 21a, 21b), dont chacune s'écarte de la plaque de montage (4, 24) pour retenir une surface extérieure d'une première surface respective afin de maintenir l'élément récepteur (5, 25) de barrière en une première position en laquelle la barrière est maintenue fermée.

5. Un loquet selon l'une quelconque des revendications précédentes, dans lequel chaque partie latérale (1a, 1b) a une surface profilée (1c, 1d) sensiblement parallèle à l'axe de pivot de l'élément récepteur (5, 25) de barrière pour éviter le pivotement lorsque la barrière est maintenue fermée, et une surface de support (1e, 1f) qui s'étend dans un plan sensiblement perpendiculaire à l'axe de pivot et contre laquelle s'engage l'élément récepteur de barrière lors du retour à une position à laquelle la barrière est maintenue fermée.

6. Un loquet selon la revendication 5, dans lequel les parties latérales (1a, 1b) de l'élément d'engagement (1, 21a, 21b) sont profilées pour s'engager en coulissant avec l'extérieur des premières surfaces (52a 52b).

7. Un loquet selon l'une quelconque des revendications précédentes, dans lequel, lorsque le loquet est en une position en laquelle la barrière peut être ouverte, un ressort (3) force au moins l'une des premières surfaces (1a, 1b) à demeurer en contact coulissant avec un bord de l'élément récepteur de barrière jusqu'au retour à la position fermée.

8. Un loquet selon l'une quelconque des revendications précédentes, dans lequel la partie de retenue (1, 21) de l'élément d'engagement est pourvue d'une plaque d'appui allongée (113, 115) maintenue en contact coulissant avec la plaque de montage (4) par un boulon (11) et une paire de parties latérales sensiblement triangulaires (1a, 1b) qui s'étendent depuis une extrémité inférieure de la plaque d'appui, chacune desdites parties latérales ayant une surface profilée (1c, 1d) dont la forme s'adapte à l'extérieur des premières surfaces (52a, 52b) d'une plaque latérale respective.

9. Un loquet selon la revendication 8 dans lequel un couvercle (2) recouvre au moins une partie de la plaque d'appui coulissante ainsi que tout ressort de rappel (3) éventuellement installé.

10. Un loquet selon l'une quelconque des revendications 1 à 3, dans lequel l'élément d'engagement revêt la forme d'une paire de parties en coin (21a, 21b) qui font partie intégrante de la plaque de montage (24) et dont une s'étend de chaque côté de l'élément récepteur (25) de barrière en la position fermée pour empêcher l'élément récepteur de barrière de pivoter ; le récepteur de barrière peut être déplacé le long de son axe de pivot pour s'écarter des parties en coin de sorte à pouvoir pivoter librement en travers d'une face d'extrémité de l'une des parties en coin, jusqu'à une position ouverte.

11. Un loquet selon la revendication 10, dans lequel la paire de parties en coin (21a, 21b) ont des parties de surface divergentes (22a, 22b) qui s'étendent entre des surfaces profilées qui maintiennent l'élément récepteur de barrière (25) en sa première position et des surfaces de support (21e, 21f) qui supportent le récepteur en la position ouverte.

12. Un loquet selon l'une quelconque des revendications précédentes dans lequel la plaque de montage (4) est rectangulaire et est pourvue de trous (41) de fixation à chaque angle, et l'élément récepteur (5, 25) de barrière est pourvu de plaques latérales dont la hauteur dépasse la largeur.

13. Un loquet selon l'une quelconque des revendications précédentes dans lequel un moyen de verrouillage (9) est prévu pour éviter tout mouvement relatif entre l'élément récepteur (5) de barrière et l'élément d'engagement (1), de sorte à verrouiller la barrière.
